# FASCICULE DE BREVET EUROPEEN

(11) **EP 1 657 093 B1**
(45) Date de publication et mention de la délivrance du brevet: **11.08.2010**
(21) Numéro de dépôt: 05300869.4
(22) Date de dépôt: 26.10.2005
(51) Int. Cl.: B60J 10/04, B60J 5/04

(54) **Porte vitrée pour un véhicule comportant un guide de vitre muni d'un élément s'opposant au vrillage**
Verglaste Fahrzeugtür mit einer Scheibenführung, die mit einem verdrillungshemmenden Element ausgerüstet ist
Vehicle door with a window and a window pane guide comprising an element to avoid the twisting of the guide

(30) Priorité: 15.11.2004 FR 0452616
(43) Date de publication de la demande: 17.05.2006
(73) Titulaire: RENAULT S.A.S., 92100 Boulogne Billancourt (FR)
(72) Inventeur: Alizon, Eric, 78520, Limay (FR); Thevenin, Laurent, 78288, Guyancourt (FR)

(56) Documents cités:
- EP-A- 0 825 046
- WO-A-2004/039617
- DE-U1- 9 414 797
- FR-A- 2 836 868

## Description

L'invention concerne une porte vitrée pour un véhicule automobile.

L'invention concerne plus particulièrement une porte vitrée pour un véhicule automobile, qui comporte un caisson inférieur creux sur un bord supérieur duquel est fixé un cadre destiné à recevoir une vitre du véhicule, dans lequel au moins deux montants du cadre comportent des bords intérieurs qui sont destinés à recevoir des guides de la vitre qui sont destiné à permettre le coulissement vertical de la vitre entre une position haute dans laquelle la vitre est reçue par les guides entre les montants du cadre qu'elle obture, et une position basse dans laquelle, après avoir glissé le long des guides, la vitre est reçue dans le caisson, la porte comportant au moins une équerre de renfort d'un montant vertical du cadre dont une branche inférieure sensiblement horizontale est fixée à un panneau vertical du caisson et dont l'autre branche supérieure verticale est fixée audit montant vertical pour en renforcer la fixation.

On connaît de nombreux exemples de portes vitrées de ce type, par exemple FR 2836868 A et EP 0 825 046 A.

La plupart des portes vitrées conventionnelles comportent un joint principal faisant le tour du cadre. Ce joint principal comporte généralement un fil armé recouvert de matériau élastomère et il comporte les guides de vitre. Ce joint principal est complété, à la jonction entre le cadre et le caisson, par un joint horizontal dit "lécheur" qui est destiné à lécher la surface de la vitre pour éviter que des impuretés ne pénètrent dans le caisson.

Le joint principal pose de nombreux problèmes, notamment au niveau du guide de vitre vertical. En effet, le fil armé agencé dans le guide vertical peut être mené à se vriller ou à se plier lors du claquement de la porte, avec pour conséquence d'entraîner la production d'un bruit parasite, en particulier quand la vitre est reçue partiellement dans le caisson.

Il peut aussi y avoir éventuellement vrillage ou pliage lors du montage, ce qui peut provoquer un mauvais coulissement de la vitre.

Pour remédier à cet inconvénient, l'invention propose une porte vitrée comportant un guide de vitre ne pouvant se vriller.

Dans ce but, l'invention propose une porte vitrée du type décrit précédemment, caractérisée en ce que la branche horizontale inférieure de l'équerre de renfort comporte au moins un moyen de fixation d'un élément horizontal qui est solidaire de l'extrémité inférieure du guide de coulissement associé au montant vertical, et qui est destiné à éviter le vrillage du guide.

Selon d'autres caractéristiques de l'invention :
- le caisson comporte au moins un panneau vertical extérieur et un panneau vertical intérieur, et la branche horizontale inférieure de l'équerre de renfort est fixée dans le caisson sur une face du panneau vertical intérieur qui est tournée vers le panneau vertical extérieur,
- la branche horizontale inférieure de l'équerre de renfort est conformée en plaque et est soudée sur la face du panneau vertical intérieur qui est tournée vers le panneau vertical extérieur en retrait du plan de coulissement de la vitre,
- la plaque qui constitue la branche horizontale inférieure de l'équerre comporte une patte qui est venue de matière avec la plaque et qui forme le moyen de fixation de l'élément horizontal qui est solidaire de l'extrémité inférieure du guide,
- la patte est réalisée par découpage local et pliage de la plaque qui constitue la branche horizontale inférieure,
- l'élément horizontal présente sensiblement la forme d'une plaque en forme de "L" couché, enrobée dans le matériau élastomère qui recouvre le guide de la vitre dont la branche verticale est destinée à être pincée entre la plaque et la patte de l'équerre, et dont la branche horizontale, solidaire de l'extrémité inférieure du guide de la vitre, s'étend au contact de la plaque de l'équerre pour éviter le vrillage du guide de la vitre.

D'autres caractéristiques et avantages de l'invention apparaîtront à la lecture de la description détaillée qui suit à titre d'illustration pour la compréhension de laquelle on se reportera aux dessins annexés dans lesquels :
- la figure 1 est une vue d'une porte vitrée selon un état antérieur de la technique ;
- la figure 2 est une vue en perspective éclatée d'une porte vitrée selon l'invention ;
- la figure 3 est une vue latérale de détail du montage du joint principal sur l'équerre,
- la figure 4 est une vue en perspective de détail du joint principal et de l'équerre.

Dans la description qui va suivre, des chiffres de référence identiques désignent des pièces identiques ou ayant des fonctions similaires.

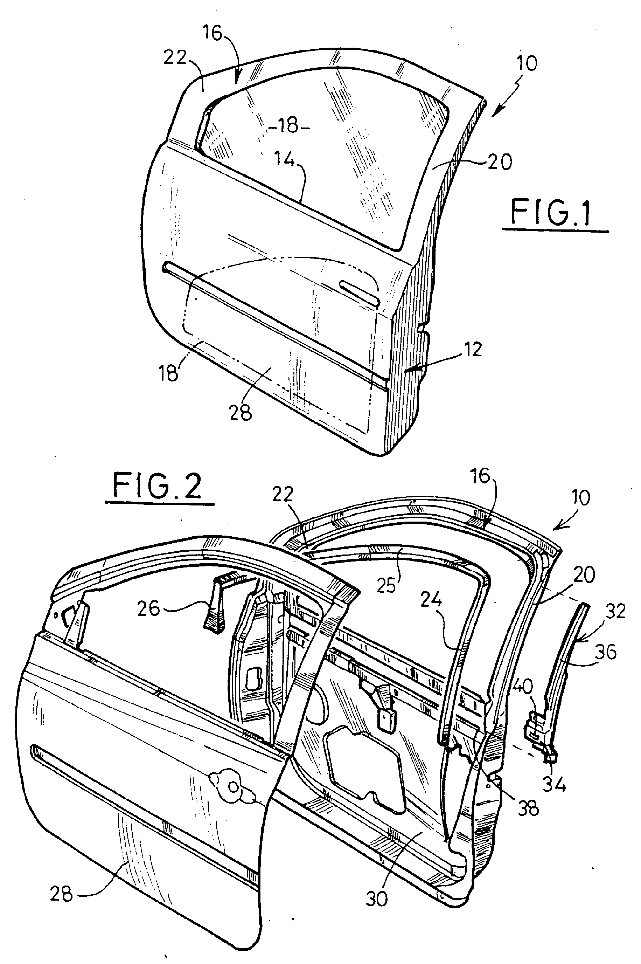

Par convention, les termes "supérieur" ou "inférieur" désignent respectivement des éléments ou des positions orientés respectivement vers le haut ou le bas des figures 1 à 4.

On a représenté à la figure 1 l'ensemble d'une porte vitrée 10 pour un véhicule automobile (non représenté).

De manière connue, la porte vitrée 10 comporte un caisson 12 inférieur creux sur un bord supérieur 14 duquel est fixé un cadre 16 destiné à recevoir une vitre 18 du véhicule.

De manière connue, au moins deux montants 20, 22 du cadre 16 comportent des bords intérieurs qui sont destinés à recevoir des guides 24, 26 de la vitre 18 qui sont destinés à permettre le coulissement vertical de la vitre 18 entre une position haute, représentée en traits forts à la figure 1, dans laquelle la vitre 18 est reçue par les guides 24, 26 entre les montants 20, 22 du cadre 16 qu'elle obture, et une position basse, représentée en traits pointillés sur la figure 1, dans laquelle, après avoir glissé le long des guides 24, 26, la vitre 18 est reçue dans le caisson 12.

Les guides 24, 26 font par exemple partie d'un joint principal 25 réalisé en fil armé et recouvert de matériau élastomère.

De manière connue, comme l'illustre la figure 2, la porte 10 comporte au moins un panneau vertical extérieur 28 et un panneau vertical intérieur 30 qui délimitent le caisson 12.

La porte 10 comporte par ailleurs au moins une équerre 32 de renfort du montant vertical 20 du cadre 16.

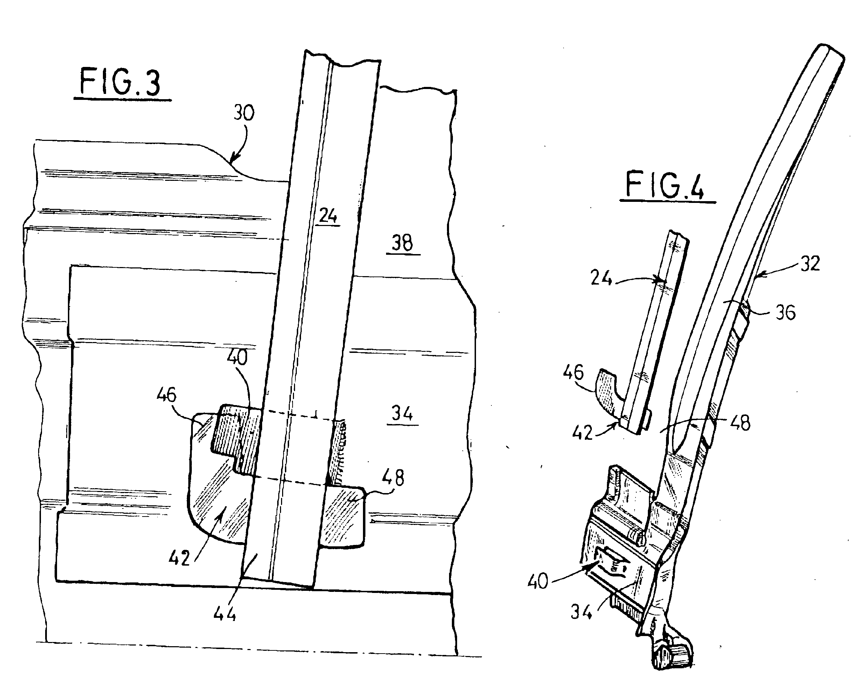

Comme l'illustrent les figures 2 et 3, une branche inférieure 34 sensiblement horizontale de l'équerre 32 est fixée à un des panneaux verticaux 28, 30 du caisson 12 et l'autre branche 36 supérieure verticale de l'équerre 32 est fixée audit montant vertical 20 pour en renforcer la fixation.

Conformément à l'invention, la branche horizontale inférieure 34 de l'équerre de renfort comporte au moins un moyen 40 de fixation d'un élément 42 horizontal qui est solidaire de l'extrémité inférieure 44 du guide 24 de coulissement associé au montant vertical 20, et qui est destiné à éviter le vrillage du guide 24.

Plus particulièrement, comme l'illustrent les figures 2 et 3, la branche horizontale inférieure 34 de l'équerre 32 de renfort est fixée dans le caisson 12 sur une face 38 du panneau 30 vertical intérieur qui est tournée vers le panneau 28 vertical extérieur.

A cet effet, la branche 34 horizontale inférieure de l'équerre 32 de renfort est conformée en plaque et elle est soudée sur la face 38 du panneau 30 vertical intérieur qui est tournée vers le panneau vertical 28 extérieur en retrait du plan de coulissement de la vitre, par exemple par un procédé de soudage au point.

Comme l'illustrent les figures 3 et 4, pour permettre la fixation de l'élément 42 horizontal sur la branche 34 horizontale inférieure de l'équerre 32 de renfort, la plaque de la branche 34 horizontale de l'équerre comporte une patte 40 qui est venue de matière avec la plaque et qui forme le moyen de fixation de l'élément 42 horizontal qui est solidaire de l'extrémité inférieure 44 du guide 24.

Dans le mode de réalisation préféré de l'invention, cette patte 40 est réalisée par découpage local et pliage de la plaque qui constitue la branche 34 horizontale inférieure de l'équerre 32 de renfort.

Dans cette configuration, comme l'illustrent les figures 3 et 4, l'élément 42 horizontal est conformé sensiblement sous la forme d'une plaque en forme de "L" couché. Cette plaque peut avantageusement être enrobée dans le matériau élastomère 44 qui recouvre conventionnellement le guide 24 de la vitre.

Comme l'illustre la figure 3, la branche verticale 46 de l'élément 42 horizontal est destinée à être pincée entre la plaque 34 et la patte 40 de l'équerre 32, et la branche horizontale 48 de l'élément 42 horizontal, solidaire de l'extrémité inférieure 44 du guide 24 de la vitre, s'étend au contact de la plaque 34 de l'équerre 32 pour éviter le vrillage du guide 24 de la vitre.

L'invention permet donc avantageusement d'éviter le vrillage d'un guide 24 de vitre lorsque la porte vitrée 10 est claquée lors de sa fermeture, ce qui garantit l'absence de bruit parasite de claquement de la vitre quand cette dernière est ouverte, en particulier quand elle est reçue partiellement dans le caisson.

## Revendications

1. Porte vitrée (10) pour un véhicule automobile, qui comporte un caisson (12) inférieur creux sur un bord (14) supérieur duquel est fixé un cadre (16) destiné à recevoir une vitre (18) du véhicule, dans lequel au moins deux montants (20,22) du cadre (16) comportent des bords intérieurs qui sont destinés à recevoir des guides (24, 26) de la vitre (18) qui sont destinés à permettre le coulissement vertical de la vitre (18) entre une position haute, dans laquelle la vitre (18) est reçue par les guides (24, 26) entre les montants du cadre (16) qu'elle obture, et une position basse dans laquelle, après avoir glissé le long des guides (24,26), la vitre est reçue dans le caisson (12), la porte (12) comportant au moins une équerre (32) de renfort d'un montant (20) vertical du cadre (16) dont une branche (34) inférieure sensiblement horizontale est fixée à un panneau vertical (30) du caisson (12) et dont l'autre branche (36) supérieure verticale est fixée audit montant vertical (24) pour en renforcer la fixation,
**caractérisée en ce que** la branche (34) horizontale inférieure de l'équerre (32) de renfort comporte au moins un moyen (40) de fixation d'un élément (42) horizontal qui est solidaire de l'extrémité inférieure (44) du guide (24) de coulissement associé au montant vertical (20), et qui est destiné à éviter le vrillage du guide (24).

2. Porte vitrée (10) selon la revendication 1, **caractérisée en ce que** le caisson (12) comporte au moins un panneau vertical extérieur (28) et un panneau vertical intérieur (30), et **en ce que** la branche (34) horizontale inférieure de l'équerre (32) de renfort est fixée dans le caisson (12) sur une face (38) du panneau (30) vertical intérieur qui est tournée vers le panneau vertical extérieur (28).

3. Porte vitrée (10) selon la revendication précédente, **caractérisée en ce que** la branche (34) horizontale inférieure de l'équerre (32) de renfort est conformée en plaque et est soudée sur la face (38) du panneau (30) vertical intérieur qui est tournée vers le panneau (28) vertical extérieur en retrait du plan de coulissement de la vitre (18).

4. Porte vitrée (10) selon la revendication précédente, **caractérisée en ce que** la plaque qui constitue la branche (34) horizontale inférieure de l'équerre (32) comporte une patte (40) qui est venue de matière avec la plaque et qui forme le moyen de fixation de l'élément (42) horizontal qui est solidaire de l'extrémité inférieure (44) du guide.

5. Porte vitrée (10) selon la revendication précédente, **caractérisée en ce que** la patte (40) est réalisée par découpage local et pliage de la plaque qui constitue la branche (34) horizontale inférieure.

6. Porte vitrée selon l'une des revendications 4 ou 5, **caractérisée en ce que** l'élément (42) horizontal présente sensiblement la forme d'une plaque en forme de "L" couché, enrobée dans le matériau (44) élastomère qui recouvre le guide (24) de la vitre, dont la branche verticale (46) est destinée à être pincée entre la plaque (34) et la patte (40) de l'équerre (32), et dont la branche horizontale (48), solidaire de l'extrémité inférieure (44) du guide (24) de la vitre, s'étend au contact de la plaque (34) de l'équerre (32) pour éviter le vrillage du guide (24) de la vitre.

## Claims

1. Motor vehicle door (10) with a window, the door comprising a hollow lower compartment (12), fixed to an upper edge (14) is a frame (16) designed to accept a window (18) belonging to the vehicle, in which at least two uprights (20, 22) of the frame (16) have inner edges designed to accept guides (24, 26) for the window (18), the guides being designed to allow the window (18) to slide vertically between a raised position, in which the window (18) is received by the guides (24, 26) between the uprights of the frame (16) which it closes, and a bottom position in which, after having slid down the guides (24, 26), the window is received in the compartment (12), the door (10) comprising at least one reinforcing bracket (32) for strengthening a vertical upright (20) of the frame (16), of which an approximately horizontal lower arm (34) is mounted on a vertical panel (30) of the compartment (12) while the other, vertical upper arm (36) is mounted on said vertical upright (24) to reinforce its mounting,
said door being **characterized in that** the horizontal lower arm (34) of the reinforcing bracket (32) comprises at least one mounting means (40) for a horizontal component (42) that is attached to the lower end (44) of the sliding guide (24) fitted to the vertical upright (20), and it is designed to prevent the guide (24) from twisting.

2. Door (10) with a window according to Claim 1, **characterized in that** the compartment (12) comprises as a minimum an outer vertical panel (28) and an inner vertical panel (30), and **in that** the lower horizontal arm (34) of the reinforcing bracket (32) is mounted in the compartment (12) on a face (38) of the inner vertical panel (30) which is oriented towards the outer vertical panel (28).

3. Door (10) with a window according to the preceding claim, **characterized in that** the lower horizontal arm (34) of the reinforcing bracket (32) is formed into a plate and is welded to that face (38) of the inner vertical panel (30) which is oriented towards the outer vertical panel (28) and set back from the plane in which the window (18) slides.

4. Door (10) with a window according to the preceding claim, **characterized in that** the plate forming the lower horizontal arm (34) of the bracket (32) comprises a leg (40) that is produced integrally with the plate and that forms the mounting means for the horizontal component (42) that is attached to the lower end (44) of the guide.

5. Door (10) with a window according to the preceding claim, **characterized in that** the leg (40) is produced by local cutting and bending of the plate forming the lower horizontal arm (34).

6. Door with a window according to either of Claims 4 and 5, **characterized in that** the horizontal component (42) is essentially an L-shaped plate with its longer arm horizontal, coated in the elastomeric material (44) that covers the window guide (24), its vertical arm (46) being designed to be gripped between the plate (34) and the leg (40) of the bracket (32), and its horizontal arm (48), attached to the lower end (44) of the window guide (24), extending in contact with the plate (34) of the bracket (32) to prevent the window guide (24) from twisting.

## Patentansprüche

1. Tür mit Glaseinsatz (10) für ein Kraftfahrzeug, die einen unteren Hohlkasten (12) aufweist, auf einem oberen Rand (14) von dem ein Rahmen (16) befestigt ist, der dazu bestimmt ist, eine Glasscheibe (18) des Fahrzeugs aufzunehmen, wobei mindestens zwei Holme (20, 22) des Rahmens (16) Innenränder aufweisen, die dazu bestimmt sind, Führungen (24, 26) der Glasscheibe (18) aufzunehmen, die dazu bestimmt sind, das senkrechte Gleiten der Glasscheibe (18) zwischen einer oberen Stellung, in der die Glasscheibe (18) von den Führungen (24, 26) zwischen den Holmen des Rahmens (16) aufgenommen wird, den sie verschließt, und einer unteren Stellung zu erlauben, in der die Glasscheibe, nachdem sie entlang der Führungen (24, 26) geglitten ist, im Kasten (12) aufgenommen wird, wobei die Tür (10) mindestens einen Verstärkungswinkel (32) eines senkrechten Holms (20) des Rahmens (16) aufweist, von dem ein im Wesentlichen waagrechter unterer Zweig (34) an einem senkrechten Blech (30) des Kastens (12) befestigt ist, und dessen anderer senkrechter oberer Zweig (36) am senkrechten Holm (24) befestigt ist, um dessen Befestigung zu verstärken,
**dadurch gekennzeichnet, dass** der untere waagrechte Zweig (34) des Verstärkungswinkels (32) mindestens eine Einrichtung (40) zur Befestigung eines waagrechten Elements (42) aufweist, das fest mit dem unteren Ende (44) der dem senkrechten Holm (20) zugeordneten Gleitführung (24) verbunden ist, und das dazu bestimmt ist, das Verwinden der Führung (24) zu verhindern.

2. Tür mit Glaseinsatz (10) nach Anspruch 1, **dadurch gekennzeichnet, dass** der Kasten (12) mindestens ein äußeres senkrechtes Blech (28) und ein inneres senkrechtes Blech (30) aufweist, und dass der untere waagrechte Zweig (34) des Verstärkungswinkels (32) im Kasten (12) auf einer Seite (38) des inneren senkrechten Blechs (30) befestigt ist, die zum äußeren senkrechten Blech (28) weist.

3. Tür mit Glaseinsatz (10) nach dem vorhergehenden Anspruch, **dadurch gekennzeichnet, dass** der untere waagrechte Zweig (34) des Verstärkungswinkels (32) als Platte ausgebildet und auf die zum äußeren senkrechten Blech (28) weisende Seite (38) des inneren senkrechten Blechs (30) geschweißt ist, die bezüglich der Gleitebene der Glasscheibe (18) zurückversetzt ist.

4. Tür mit Glaseinsatz (10) nach dem vorhergehenden Anspruch, **dadurch gekennzeichnet, dass** die Platte, die den unteren waagrechten Zweig (34) des Winkels (32) bildet, eine Lasche (40) aufweist, die aus einem Stück mit der Platte hergestellt ist und die Befestigungseinrichtung des waagrechten Elements (42) bildet, das fest mit dem unteren Ende (44) der Führung verbunden ist.

5. Tür mit Glaseinsatz (10) nach dem vorhergehenden Anspruch, **dadurch gekennzeichnet, dass** die Lasche (40) durch lokales Ausschneiden und Falten der Platte hergestellt wird, die den unteren waagrechten Zweig (34) bildet.

6. Tür mit Glaseinsatz nach einem der Ansprüche 4 oder 5, **dadurch gekennzeichnet, dass** das waagrechte Element (42) im Wesentlichen die Form einer Platte in der Form eines liegenden "L" aufweist, die mit dem Elastomermaterial (44) umhüllt ist, das die Führung (24) der Glasscheibe bedeckt, dessen senkrechter Zweig (46) dazu bestimmt ist, zwischen der Platte (34) und der Lasche (40) des Winkels (32) eingeklemmt zu werden, und dessen waagrechter Zweig (48), der fest mit dem unteren Ende (44) der Führung (24) der Glasscheibe verbunden ist, sich in Kontakt mit der Platte (34) des Winkels (32) erstreckt, um das Verwinden der Führung (24) der Glasscheibe zu vermeiden.
